(19) Europäisches Patentamt
European Patent Office
Office européen des brevets

(11) **EP 2 950 046 B1**

(12) **EUROPÄISCHE PATENTSCHRIFT**

(45) Veröffentlichungstag und Bekanntmachung des Hinweises auf die Patenterteilung:
**01.05.2019 Patentblatt 2019/18**

(51) Int Cl.:
*G01D 5/34* (2006.01)    *G01B 21/24* (2006.01)

(21) Anmeldenummer: **15168411.5**

(22) Anmeldetag: **20.05.2015**

(54) **VERFAHREN ZUM ERMITTELN EINER GESCHLOSSENEN BAHNKURVE MITTELS EINES LASERS UND EINES LASERLICHTSENSORS UND VORRICHTUNG ZUM ERMITTELN EINER GESCHLOSSENEN BAHNKURVE**

METHOD FOR DETERMINING A CLOSED TRAJECTORY BY MEANS OF A LASER AND OF A LASER LIGHT SENSOR AND DEVICE FOR DETERMINING A CLOSED TRAJECTORY

PROCÉDÉ DE DÉTERMINATION D'UNE TRAJECTOIRE FERMÉE À L'AIDE D'UN LASER ET D'UN CAPTEUR À LUMIÈRE LASER ET DISPOSITIF DE DÉTERMINATION D'UNE TRAJECTOIRE FERMÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2014 DE 102014210248**

(43) Veröffentlichungstag der Anmeldung:
**02.12.2015 Patentblatt 2015/49**

(73) Patentinhaber: **Prüftechnik Dieter Busch AG**
**85737 Ismaning (DE)**

(72) Erfinder:
• **Locoge, Pascal**
**85435 Erding (DE)**
• **Zöcke, Christine**
**85521 Riemerling (DE)**

(56) Entgegenhaltungen:
DE-A1- 3 911 307        DE-A1- 10 236 555
DE-A1-102004 024 398    US-A1- 2002 129 504
US-A1- 2014 139 823     US-B1- 6 434 849

**Beschreibung**

Hintergrund der Erfindung

Die vorliegende Erfindung betrifft ein Verfahren zum Ermitteln einer geschlossenen Bahnkurve mittels eines Lasers und eines Laserlichtsensors mit einem ebenen Messfeld und eine Vorrichtung zum Ermitteln einer geschlossenen Bahnkurve.

Verfahren und Vorrichtungen der eingangs genannten Art kommen insbesondere bei Vorrichtungen und Verfahren zum Einsatz, mit welchen eine ggf. vorhandene Fehlausrichtung zweier durch eine Kupplung miteinander verbundener Wellen ermittelt werden kann. Derartige Fehlausrichtungen, also Abweichungen von der Situation, in welcher die Drehachsen bzw. Mittelachsen der über die Kupplung miteinander verbundenen Wellen fluchten, führen oft zu unerwünschten Vibrationen beim Betrieb der die beiden Wellen aufweisenden Vorrichtung.

Verfahren und Vorrichtungen zum Ermitteln der Fehlausrichtung sind z.B. aus der DE 195 06 471 A1, der DE 102 36 555 A1, der DE 101 42 462 A1, der DE 101 38 831 A1 und der DE 39 11 307 A1 bekannt.

Aus der DE 199 49 834 A1 ist allgemein ein Verfahren zum Ermitteln der Ausrichtung eines zylindrischen Körpers bezüglich einer Referenzrichtung bekannt. Aus der US2014/0139823A1 ist eine Vorrichtung und ein Verfahren zur Positionsbestimmung zwei Wellen zueinander bekannt. Aus der US 2002/0129504 A1 ist ein Prozess und eine Vorrichtung zur Bestimmung der Axialposition zweier Maschinenspindeln bekannt. Aus der US 6,434,849 B1 ist ein Verfahren zur Bestimmung eines lateralen bzw. angularen Offsets zwischen zwei rotierbaren Teilen bekannt. Aus der DE 10 2004 024 398 A1 sind Verfahren und Vorrichtungen zum Einstellen einer Bestimmungsvorschrift eines Winkelsensors bekannt. Aus der DE 39 11 307 A1 ist ein Verfahren zum Feststellen einer Fluchtung oder Versetzung zweier Wellen bekannt. Aus der DE 102 36 555 A1 ist ein Verfahren zum Bestimmen des Versatzes zweier Wellen bekannt.

Aus der DE 10 2004 024 398 A1 ist der Einsatz eines Winkelsensors im Automobilbereich zum Bestimmen einer Fahrrichtung bekannt und aus der DE 11 2004 000 113 T5 ist der Einsatz eines Magnetsensors zur Bestimmung der Linearposition eines beweglichen Elements bekannt.

Es ist z.B. aus der DE 102 36 555 A1 bekannt, zum Ermitteln der Fehlausrichtung zweier Wellen wenigstens ein ebenes Messfeld eines Laserlichtsensors zusammen mit einem Laser einzusetzen, um die Fehlausrichtung der über eine Kupplung miteinander verbundenen Wellen auf der Grundlage der von dem Laserlicht-Fleck des Laserlichtstrahls auf dem wenigstens einen ebenen Messfeld beschriebenen Ellipsenbahn zu ermitteln, welche bei Drehung der ersten oder zweiten Welle auf dem Messfeld beschrieben wird, wenn der Laser bzw. das Messfeld drehfest mit wenigstens einer der beiden Wellen verbunden sind und der Laserstrahl auf das Messfeld gerichtet wird.

Um aus der ermittelten Bahnkurve, die meist in Form einer Ellipsenbahn ausgebildet ist, die ggf. vorhandene Fehlausrichtung zu ermitteln, werden nicht nur die X-Koordinaten und Y-Koordinaten des Laserlicht-Flecks erfasst sondern es wird zudem auch der Drehwinkel der ersten bzw. zweiten Welle relativ zu einem Referenzwinkel-Wert bzw. einer vorgegebenen Drehstellung der ersten oder zweite Wellen gemessen. Zur Messung des sich von der Drehstellung bzw. dem Referenzwinkel-Wert bemessenden Drehwinkels wird meist auf ein Winkelmessgerät wie ein Inklinometer zurückgegriffen, welches die Messung einer Neigung relativ zur Schwerkraftrichtung ermöglicht.

Die Messung des Drehwinkels zur Bestimmung der Winkellage der jeweils von dem Laserlicht-Fleck beschriebenen Ellipse funktioniert mit hoher Genauigkeit, wenn Wellen von Maschinen auszurichten sind, die im wesentlichen horizontal ausgerichtet sind. Für die Ermittlung einer ggf. vorhandenen Fehlausrichtung von im Wesentlichen vertikal ausgerichteten Wellen kann - bedingt durch das Meßprinzip - ein Inklinometer nicht oder nicht mit hinreichender Genauigkeit verwendet werden. Entsprechendes ist auch bei instabilen Böden der Fall, also wenn sich die auszurichtenden Wellen z.B. auf einem Schiff befinden.

Zugrundeliegende Aufgabe

Es ist Aufgabe der Erfindung, ein Verfahren und eine Vorrichtung anzugeben, welche die Ermittlung einer Fehlausrichtung von zwei über eine Kupplung miteinander verbundenen Wellen auch in Situationen mit hoher Genauigkeit ermöglichen, in welchen eine Messung des Drehwinkels nicht oder nicht mit einer hinreichenden Genauigkeit möglich ist.

Diese Aufgabe wird mit einem Verfahren mit den Merkmalen des unabhängigen Anspruchs 1 und mit einer Vorrichtung mit den Merkmalen des unabhängigen Anspruchs 7 gelöst.

Das erfindungsgemäße Verfahren betrifft ein Verfahren zum Ermitteln einer geschlossenen Bahnkurve mittels eines Lasers und eines Laserlichtsensors mit einem ebenen Messfeld.

Das Messfeld weist ein Koordinatensystem mit einer X-Koordinatenachse und einer zu der X-Koordinatenachse rechtwinkeligen Y-Koordinatenachse auf, wobei der Laserlicht-Sensor dazu eingerichtet ist, die X-Koordinate und Y-Koordinate der Position des Laserlicht-Flecks des auf das Messfeld auftreffenden Laserlichtstrahls des Lasers auf dem Messfeld zu erfassen bzw. wobei der Laserlicht-Sensor dazu eingerichtet ist, die X-Koordinate und Y-Koordinate der Position des Laserlicht-Flecks zu erfassen, der sich beim Bestrahlen des auf das Messfeld auftreffenden Laserlichtstrahls des Lasers auf dem Messfeld ausbildet.

Bei dem Laserlicht-Sensor kann es sich um einen beliebigen mit einem ebenen Messfeld versehenen Laserlicht-Sensor handeln. Besonders bevorzugt handelt es sich um einen Laserlicht-Sensor, der eine Mehrzahl von Zeilensensoren - z.B. nach Art der in digitalen Fotokameras eingesetzten Zeilensensoren - zur Ausbildung des Messfelds aufweist. Die von dem Laserlicht-Sensor erfassten X-Koordinaten und Y-Koordinaten können in Form analoger oder digitaler Signale über einen Signalübertragungsweg - auch kabellos- z.B. einer Auswerteeinrichtung, wie z.B. einem Computer z.B. in Form eines Laptops oder eines Tablets zur weiteren Auswertung zugeführt werden.

Bei der vorstehend und nachstehend erwähnten X-Koordinate und Y-Koordinate der Position des Laserlicht-Flecks des auf das Messfeld auftreffenden Laserlichtstrahls bzw. des sich auf dem Messfeld beim Bestrahlen mit dem Laserlichtstrahl ausbildenden Laserlicht-Flecks handelt es sich um die Koordinaten einer Position in Form eines Punktes obwohl der Laserlicht-Fleck immer eine flächige Ausdehnung auf dem Messfeld hat. Unter den X-Koordinaten und Y-Koordinaten der Position des Laserlicht-Flecks sind vorstehend und nachstehend immer die Koordinaten eines Punktes zu verstehen, der aus Ausbildung der Fläche und/oder der Helligkeitsverteilung des Laserlicht-Flecks auf der Fläche ermittelt werden kann. Insbesondere kann es sich bei dem Punkt z.B. um den Flächenschwerpunkt des Laserlicht-Flecks handeln. Die Ermittlung bzw. Berechnung des Punktes kann vorzugsweise automatisiert mittels einer Berechnungsvorrichtung, wie z.B. einem Computer auf der Grundlage von dem jeweiligen Laserlicht-Fleck zugeordneten digitalen und/oder analogen Signalen vorgenommen werden, die von dem Laserlicht-Sensor ausgegeben werden.

Das Verfahren umfasst die folgenden Schritte:

A) Drehfestes Verbinden des Lasers mit einer ersten Welle, die über eine Kupplung mit einer zweiten Welle verbunden ist, so dass eine Drehung der ersten Welle auf die zweite Welle übertragbar ist und umgekehrt,

(B) Drehfestes Verbinden des Messfelds mit der zweiten Welle, wobei das Messfeld derart mit der zweiten Welle verbunden wird, dass die Y-Koordinatenachse und die X-Koordinatenachse im wesentlichen rechtwinkelig zur Drehachse der zweiten Welle orientiert sind,

(C) Ausrichten des Lasers derart, dass der von dem Laser erzeugbare Laserlichtstrahl parallel zur Drehachse der ersten Welle ausgerichtet ist und auf das Messfeld auftreffen kann,

(D) Drehen der ersten oder zweiten Welle in einem vorgegebenen Drehsinn um wenigstens 90 Grad und Bestrahlen des Messfelds mit dem Laserlichtstrahl des Lasers während des Drehens,

(E) Erfassen der X-Koordinaten und Y-Koordinaten von wenigstens drei Positionen bzw. von wenigstens drei verschiedenen bzw. unterschiedlichen Positionen des Laserlicht-Flecks auf dem Messfeld durch den Laserlicht-Sensor, welche der Laserlicht-Fleck während des Drehens in Schritt D auf dem Messfeld einnimmt,

(F) Ermitteln der zeitlich zuerst erfassten X-Koordinate und der zeitlich zuerst erfassten Y-Koordinate und Zuordnen eines vorgegebenen Drehwinkel-Werts der zeitlich zuerst erfassten X-Koordinate und der zeitlich zuerst erfassten Y-Koordinate, und

(G) Ermitteln der geschlossenen Bahnkurve mittels der in Schritt (E) erfassten X-Koordinaten und/oder der in Schritt (E) erfassten Y-Koordinaten,

wobei in Schritt (G) ferner auf der Grundlage der erfassten X-Koordinaten und/oder der erfassten Y-Koordinaten eine Darstellung der Bahnkurve ermittelt wird, die durch den Drehwinkel der ersten oder zweiten Welle parametrisiert ist, der sich ausgehend von dem vorgegebenen Drehwinkel-Wert in Richtung des vorgegebenen Drehsinns bemisst.

Durch die Benennung der Schritte mit den Buchstaben A bis G ist keine Bindung an eine zeitliche Reihenfolge zu verstehen. So können die Schritte A, B und C z.B. in beliebiger Reihenfolge, insbesondere auch zeitgleich bzw. im wesentlichen zeitgleich durchgeführt werden. Der Schritt G wird nach Schritt F und der Schritt F nach Schritt E vorgenommen.

Der Laser wird in Schritt A drehfest mit einer ersten Welle verbunden, die über eine Kupplung mit einer zweiten Welle verbunden ist, so dass eine Drehung der ersten Welle auf die zweite Welle übertragbar ist und umgekehrt.

Das Messfeld wird in Schritt B drehfest mit der zweiten Welle verbunden, wobei das Messfeld derart mit der zweiten Welle verbunden wird, dass die Y-Koordinatenachse und die X-Koordinatenachse im wesentlichen rechtwinkelig zur Drehachse der zweiten Welle orientiert sind bzw. rechtwinkelig zur Drehachse der zweiten Welle orientiert sind. Unter einer im wesentlichen rechtwinkeligen Orientierung bzw. Ausrichtung ist hierbei eine Abweichung von der perfekten rechtwinkeligen Ausrichtung zu verstehen, die kleiner ist als 5 Grad, vorzugsweise kleiner ist als 1 Grad.

Dass zwei Achsen eine rechtwinkelige bzw. im Wesentlichen rechtwinkelige Orientierung bzw. Ausrichtung zueinander aufweisen setzt selbstverständlich nicht voraus, dass sich diese Achsen immer schneiden müssen. Wobei, wenn sich die beiden Achsen nicht schneiden, diese durch eine translatorische Verschiebung einen gemeinsamen Schnittpunkt ausbilden und dann einen rechten bzw. im wesentlichen rechten Winkel einschließen können.

In Schritt C erfolgt das Ausrichten des Lasers derart, dass der von dem Laser erzeugbare Laserlichtstrahl parallel zur Drehachse der ersten Welle ausgerichtet ist und auf das Messfeld auftreffen kann, wobei besonders bevorzugt, insbesondere für Umdrehungen von 360 Grad, der Laser und das Messfeld in Schritt A und B derart drehfest mit der ersten bzw. zweiten Welle verbunden werden, dass der Laser derart parallel bzw. im wesentlichen parallel zur Drehachse der ersten Welle ausgerichtet werden kann, dass der von dem Laser erzeugbare Laserlichtstrahl in einer beliebigen Drehstellung bzw. in jeder möglichen Drehstellung der ersten oder zweiten Welle auf das Messfeld auftreffen kann.

Das drehfeste Verbinden des Lasers bzw. Messfelds mit der ersten bzw. zweiten Welle ist z.B. aus der DE 102 36 555 A1 bekannt und stellt eine vorbereitende Maßnahmen dar, um eine ggf. vorhandenen Fehlausrichtung der beiden Wellen zueinander in der in der DE 102 36 555 A1 beschriebenen Weise zu bestimmen.

Zur Bestimmung der Winkellage einer geschlossen Bahnkurve in Form einer Ellipsenbahn bzw. Kreisbahn bzw. zur Bestimmung einer Darstellung der Ellipsenbahn bzw. Kreisbahn auf der Grundlage der erfassten X-Koordinaten und/oder Y-Koordinaten des Laserlicht-flecks auf dem Messfeld, die durch den Drehwinkel der ersten oder zweien Welle parametrisiert ist, wird z.B. beim dem aus der DE 102 36 555 A1 bekannten Verfahren während des Drehens der Drehwinkel mittels eines Drehwinkelmessers bzw. Meßzeigers, wie z.B. einem Inklinometer gemessen, einhergehend mit dem Nachteil, dass die Messung des Drehwinkels - bedingt durch das Meßprinzip des Inklinometers bzw. eines beliebigen Neigungsmessers - bei der Ermittlung einer Fehlausrichtung von im Wesentlichen vertikal ausgerichteten Wellen nicht oder nicht mit hinreichender Genauigkeit möglich ist. Entsprechendes ist auch bei instabilen Böden der Fall, also wenn die sich die auszurichtenden Wellen z.B. auf einem Schiff befinden.

Im Unterschied zu den obigen bekannten Lösungen kann mittels des erfindungsgemäßen Verfahrens die Ermittlung einer Fehlausrichtung von zwei über eine Kupplung miteinander verbundenen Wellen auch in Situationen mit hoher Genauigkeit möglich gemacht werden, in welchen eine Messung des Drehwinkels nicht oder nicht mit einer hinreichenden Genauigkeit möglich ist. Denn in Schritt G des erfindungsgemäßen Verfahrens wird auf der Grundlage der in Schritt E erfassten X-Koordinaten und/oder Y-Koordinaten eine Darstellung der Bahnkurve ermittelt, die durch den Drehwinkel der ersten oder zweiten Welle parametrisiert ist, der sich ausgehend von dem vorgegebenen Drehwinkel-Wert (vgl. Schritt F) in Richtung des vorgegebenen Drehsinns bemisst. Das heißt, dass eine Messung des Drehwinkels während des Erfassens der X-Koordinaten und Y-Koordinaten der Positionen des Laserlicht-Flecks auf dem ebenen Messfeld in vorteilhafter Weise nicht vorgenommen werden muss. Denn die Winkellage bzw. die Parameterdarstellung der geschlossen Bahnkurve bzw. der gekrümmten geschlossenen Bahnkurve, die vorzugsweise eine Ellipse oder ein Kreis ist, kann vorteilhaft unter Verwendung der in Schritt E erfassten Koordinaten, des vorgegebenen Drehwinkel-Werts, welcher der zeitlich zuerst erfassten X-Koordinate und der zeitlich zuerst erfassten Y-Koordinate zugordnet ist, und des vorgegebenen Drehsinns ermittelt werden. Der Drehsinn kann hierbei insbesondere durch die gewählte Drehrichtung der jeweiligen Einrichtung, wie z.B. einer Einrichtung in Form einer Antriebseinrichtung vorgegeben sein, welche die beiden Wellen umfasst. In Schritt D ist lediglich dafür Sorge zu trage,, dass um wenigstens 90 Grad gedreht wird, was auch ohne Inklinometermessung auf beliebige Weise realisiert werden kann.

Die vorteilhaft ohne Drehwinkelmessung durch das erfindungsgemäße Verfahren ermittelbare Bahnkurve kann dann vorteilhaft in z.B. aus der DE 102 36 555 A1 bekannten Weise für die Ermittlung einer eventuellen Fehlausrichtung der beiden Wellen verwendet werden, so dass das erfindungsgemäße Verfahren also vorteilhaft die Ermittlung einer Fehlausrichtung der über die Kupplung miteinander verbundenen Wellen auch in Situationen mit hoher Genauigkeit ermöglichen kann, in welchen eine Messung des Drehwinkels nicht oder nicht mit einer hinreichenden Genauigkeit möglich ist.

Bei dem erfindungsgemäßen Verfahren ist in Schritt E vorgesehen, dass die X-Koordinaten und Y-Koordinaten von wenigstens drei Positionen des Laserlicht-Flecks bzw. wenigstens drei unterschiedlichen Positionen des Laserlicht-Flecks auf dem Messfeld durch den Laserlicht-Sensor erfasst werden. Besonders bevorzugt können auch die X-Koordinaten und Y-Koordinaten von wesentlich mehr Positionen, die der Laserlicht-Fleck während des Drehens in Schritt D auf dem Messfeld einnimmt, erfasst werden. So kann die Anzahl der Positionen z.B. auch zehn oder zwanzig oder mehr als zehn oder zwanzig betragen, so dass der Ermittlung der geschlossenen Bahnkurve eine hohe Anzahl von Positionen des Laserlicht-Flecks zugrundegelegt werden kann, einhergehend mit einer sehr genauen Genauigkeit bei dem Ermitteln bzw. Bestimmen der Bahnkurve, die z.B. in bekannter Weise durch Kurvenanpassung an die erfassten X-Koordinaten und Y-Koordinaten ermittelt werden kann.

Der vorgegebene Drehwinkel-Wert gemäß Schritt F des erfindungsgemäßen Verfahrens beträgt vorzugsweise null Grad, einhergehend mit dem Vorteil, dass von diesem vorgegebenen Drehwinkel-Wert nach Art eines Start-Winkelwerts bzw. Referenz-Winkelwerts der Drehwinkel (vgl. auch Schritt G) auf einfache und praktische Weise bemessen werden kann. Selbstverständlich kann der zeitlich zuerst erfassten X-Koordinate und der zeitlich zuerst erfassten Y-Koordinate auch ein beliebiger anderer Winkelwert zugeordnet werden. Der vorgegebene Drehwinkel-Wert ist beliebig definierbar bzw. festsetzbar, um von diesem ausgehend nach Art einer festen Referenz den Drehwinkel zu bemessen.

Bei einer besonders bevorzugten Ausführungsform des erfindungsgemäßen Verfahrens wird in Schritt D die erste oder zweite Welle um 360 Grad gedreht und in Schritt E werden die X-Koordinaten und Y-Koordinaten von wenigstens sechzehn Positionen des Laserlicht-Flecks auf dem Messfeld erfasst, wobei in Schritt G eine geschlossene und durch den Drehwinkel der ersten oder zweiten Welle parametrisierte Bahnkurve in Form einer Ellipse oder eines Kreises ermittelt, wobei zum Ermitteln der parametrisierten Bahnkurve ausschließlich nur die erfassten Y-Koordinaten oder ausschließlich nur die erfassten X-Koordinaten verwendet werden.

Diese besonders bevorzugte Ausführungsform ist insbesondere dann vorteilhaft, wenn infolge von Meßungenauigkeiten, die wiederum z.B. die Folge eines Spiels in der die beiden Wellen miteinander verbindenden Kupplung sein können, die erfassten X-Koordinaten oder die erfassten Y-Koordinaten eine große Schwankung, insbesondere in Bezug auf eine durch Kurvenanpassung an die erfassten X-Koordinaten und Y-Koordinaten ermittelte Bahnkurve in Form eines Kreises oder einer Ellipse aufweisen. Es konnte auch durch Versuchsreihen gezeigt werden, dass trotz Vorliegens großer Schwankungen der X-Koordinate oder der Y-Koordinate eine mittels dieser bevorzugten Ausführungsform ermittelte geschlossene Bahnkurve, der Bahnkurve, die der Laserlichtfleck ohne die Meßungenauigkeiten auf dem ebenen Messfeld beschreiben würde, sehr nahe kommt bzw. vorteilhaft nur sehr geringfügig von dieser abweicht.

Zum Ermitteln dieser Schwankung der X-Koordinaten bzw. der Y-Koordinaten kann z.B. in bekannter Weise für jede erfasste Position des Laserlicht-Flecks der Abstand der Position zu der Ellipse oder dem Kreis in Richtung parallel zur X-Koordinatenachse und/oder in Richtung parallel zur Y-Koordinatenachse - also der sich in einer Richtung parallel zur X-Koordinatenachse bzw. Y-Koordinatenachse bemessende Abstand- ermittelt und ein Mittelwert dieser Abstände gebildet werden.

Wenn also die Schwankung der X-Koordinaten bzw. Y-Koordinaten zu hoch ist bzw. ein vorgegebenes Maß überschreitet, kann gemäß der obigen bevorzugten Ausführungsform durch ausschließliches Verwenden der Y-Koordinaten, wenn die X-Koordinaten zu stark schwanken bzw. durch ausschließliches Verwenden der X-Koordinaten, wenn die Y-Koordinaten zu stark schwanken, eine geschlossene gekrümmte Bahnkurve in Form einer Ellipse oder eines Kreises bereitgestellt werden, die der Bahnkurve, die Laserlichtfleck ohne die Meßungenauigkeiten auf dem ebenen Messfeld beschreiben würde, sehr nahe kommt und mithin zur Ermittlung der Ausrichtung der beiden Wellen zueinander vorteilhaft herangezogen werden kann.

Besonders bevorzugt können auch hier die X-Koordinaten und Y-Koordinaten von wesentlich mehr als sechzehn Positionen, die der Laserlicht-Fleck während des Drehens in Schritt D auf dem Messfeld einnimmt, erfasst werden. So kann die Anzahl der Positionen z.B. auch zehn oder zwanzig oder dreißig mehr als zehn oder zwanzig oder dreißig betragen, so dass der Ermittlung der geschlossenen Bahnkurve eine hohe Anzahl von Positionen des Laserlicht-Flecks zugrundegelegt werden kann, einhergehend mit einer sehr genauen Genauigkeit bei dem Ermitteln bzw. Bestimmen der Bahnkurve, die z.B. in bekannter Weise durch Kurvenanpassung an die erfassten X-Koordinaten und Y-Koordinaten ermittelt werden kann

Bevorzugt erfolgt das Ermitteln einer parametrisierten Bahnkurve in Form einer Ellipse oder eines Kreises ausschließlich auf der Grundlage der erfassten Y-Koordinaten oder ausschließlich auf der Grundlage der erfassten X-Koordinaten mittels einer Funktion, die unter anderem auf einer Ellipsengleichung beruht, wie nachfolgend beispielhaft für den Fall dargelegt, bei dem ausschließlich nur die erfassten Y-Koordinaten herangezogen werden.

So können die erfassten Y-Koordinaten zunächst gemäß der folgenden Beziehung skaliert und normiert werden:

$$Ynormiert = \frac{y - (\frac{ymax + ymin}{2})}{(\frac{ymax - ymin}{2})}$$

Ferner kann unter Verwendung der Gleichung einer zentrierten und rotierten Ellipse

$$Ymax = a \cos t \sin \theta o + b \sin t cos\theta o$$

und auf der Grundlage der obigen Normierung folgende Beziehung ermittelt werden:

$$Ymax = \sqrt{a^2 (\sin \theta o)^2 + b^2 (\cos \theta o)^2}$$

Die zentrierten bzw. skalierten und normierten Messwerte lassen sich dann in Form folgender Sinusfunktion ausdrücken:

$$\frac{y}{ymax} = \frac{y}{\sqrt{a^2\,(\sin\theta o)^2 + b^2\,(\cos\theta o)^2}} = \sin(\varphi o + t).$$

Somit kann dann mittels der Beziehung

$$\varphi = \sin^{-1}\left(\frac{y - \left(\dfrac{ymax + ymin}{2}\right)}{\left(\dfrac{ymax - ymin}{2}\right)}\right)$$

jeder erfassten Y-Koordinate der Position des Laserlicht-Flecks auf dem ebenen Messfeld ein Drehwinkel $\varphi$ der ersten oder zweiten Welle zugeordnet werden kann, der sich ausgehend von dem vorgegebenen Drehwinkel-Wert (vgl. Schritt F des erfindungsgemäßen Verfahrens) in Richtung des vorgegebenen Drehsinns, der z.B. durch eine beliebige, hierfür geeignete Messvorrichtung - wie z.B. einem Inklinometer - gemessen werden kann, bemisst, so dass die auf diese Weise bereitgestellten Punkte bzw. Positionen eine geschlossene gekrümmte Bahnkurve in Form einer Ellipse (oder eines Kreises, da der Kreis ein Spezialfall einer Ellipse ist) beschreiben, die durch den Drehwinkel $\varphi$ parametrisiert ist, wobei bei der letzten Beziehung eine Skalierung zwischen 0 Grad und 360 Grad vorzunehmen ist, da die Funktion arcsin nur auf dem Wertebereich [-90 Grad, 90 Grad] definiert ist.

Bei einer weiteren bevorzugten Ausführungsform des erfindungsgemäßen Verfahrens wird in Schritt D die erste oder zweite Welle um wenigstens 90 Grad und um weniger als 360 Grad oder um im wesentlichen 180 Grad bzw. um 180 gedreht, wobei in Schritt D die X-Koordinaten und Y-Koordinaten von wenigstens drei Positionen des Laserlicht-Flecks auf dem Messfeld erfasst werden, wobei in Schritt G eine geschlossene Bahnkurve in Form einer Ellipse oder eines Kreises durch Kurvenanpassung an die erfassten X-Koordinaten und Y-Koordinaten ermittelt wird, und wobei zum Ermitteln der parametrisierten Darstellung der Bahnkurve jedem Punkt auf der Bahnkurve der sich von dem vorgegebenen Drehwinkel-Wert in Richtung des vorgegebenen Drehsinns aus bemessende Drehwinkel zugeordnet wird.

Die obige weitere bevorzugte Ausführungsform ist insbesondere dann von Vorteil, wenn infolge vorliegender räumlicher Gegebenheit eine Drehung um 360 Grad nicht möglich ist, wobei diese Ausführungsform vorzugsweise auch nur dann zum Ermitteln der parametrisierten Bahnkurve verwendet wird, wenn die erfassten X-Koordinaten oder die erfassten Y-Koordinaten keine zu große Schwankung infolge von Meßungenauigkeiten, insbesondere in Bezug auf eine durch Kurvenanpassung an die erfassten X-Koordinaten und Y-Koordinaten ermittelte Bahnkurve in Form eines Kreises oder einer Ellipse aufweisen - bezüglich der Schwankungen vgl. hierzu auch die obigen Ausführungen für die besonders bevorzugte Ausführungsform, bei welcher in Schritt D die erste oder zweite Welle um 360 Grad gedreht wird.

Insbesondere durch Versuchsreihen konnte gezeigt werden, dass trotz Vorliegens von Schwankungen der X-Koordinate oder der Y-Koordinate mittels der weiteren bevorzugten Ausführungsform eine geschlossene Bahnkurve in Form eines Kreises oder einer Ellipse ermittelt bzw. bestimmt werden kann, die der Bahnkurve, die Laserlichtfleck ohne die Meßungenauigkeiten auf dem ebenen Messfeld beschreiben würde, sehr nahe kommt bzw. vorteilhaft nur sehr geringfügig von dieser abweicht, so dass die ermittelte geschlossene Bahnkurve dann vorteilhaft in z.B. aus der DE 102 36 555 A1 bekannten Weise für eine präzise Ermittlung einer eventuellen Fehlausrichtung der beiden Wellen verwendet werden kann.

Besonders bevorzugt werden die Schritte E bis G automatisiert vorgenommen, so dass das erfindungsgemäße Verfahren vorteilhaft z.B. in einen laufenden Produktionsprozess integriert werden kann, in welchem eine regemäßige Überwachung der Ausrichtung zweier durch eine Kupplung miteinander verbundener Wellen erwünscht bzw. erforderlich ist.

Die erfindungsgemäße Vorrichtung zum Ermitteln einer geschlossenen Bahnkurve weist einen Laser, einen Laserlicht-Sensor mit einem ebenen Messfeld und eine Auswerteeinheit auf.

Das ebene Messfeld des Laserlichtsensors weist ein Koordinatensystem mit einer X-Koordinatenachse und einer zu der X-Koordinatenachse rechtwinkeligen Y-Koordinatenachse auf, wobei der Laserlicht-Sensor dazu eingerichtet ist, die X-Koordinate und Y-Koordinate der Position des Laserlicht-Flecks des auf das Messfeld auftreffenden Laserlichtstrahls auf dem Messfeld zu erfassen, der von dem Laser erzeugbar ist.

Der Laser ist drehfest mit einer ersten Welle verbindbar, die über eine Kupplung mit einer zweiten Welle verbunden ist, so dass eine Drehung der ersten Welle auf die zweite Welle übertragbar ist und umgekehrt. Das Messfeld ist derart drehfest mit der zweiten Welle verbindbar, dass die Y-Koordinatenachse und die X-Koordinatenachse rechtwinkelig bzw. im wesentlichen rechtwinkelig zur Drehachse der zweiten Welle orientiert sind. Der Laser ist derart ausrichtbar, dass der von dem Laser erzeugbare Laserlichtstrahl parallel zur Drehachse der ersten Welle ausgerichtet ist und auf das Messfeld auftreffen kann.

Vorzugsweise kann eine Steuereinheit vorgesehen sein, wobei die erste oder zweite Welle von der Steuereinheit derart steuerbar sein kann, dass die erste Welle oder zweite Welle - z.B. ausgehend von einer vorgegebenen Drehstellung der ersten oder zweiten Welle - in einem vorgegebenen Drehsinn drehbar ist, wobei ferner auch der Laser von der Steuereinheit zum Bestrahlen des Messfelds mit dem Laserlichtstrahl des Lasers während des Drehens der ersten oder zweiten Welle aktivierbar sein kann. Insbesondere kann diese Steuereinheit ferner dazu eingerichtet sein, den Laserlicht-Sensor zum Erfassen der X-Koordinaten und Y-Koordinaten der Positionen des Laserlicht-Flecks des Laserlichtstrahls auf dem Messfeld zu aktivieren, welche der Laserlicht-Fleck während des Drehens der ersten oder zweiten Welle um wenigstens 90 Grad und um weniger als 360 Grad oder um 180 Grad oder um 360 Grad auf dem Messfeld einnimmt.

Die Auswerteeinheit ist dazu eingerichtet, aus den bei einer Drehung der ersten oder zweiten Welle um wenigstens 90 Grad erfassten X-Koordinaten und Y-Koordinaten von wenigstens drei Positionen des Laserlicht-Flecks, welche der Laserlicht-Fleck bei der Drehung auf dem Messfeld einnimmt, die zeitlich zuerst erfasste X-Koordinate und die zeitlich zuerst erfasste Y-Koordinate zu ermitteln und diese zeitlich zuerst erfassten Koordinaten einem vorgegebenen Drehwinkel-Wert zuzuordnen. Die Auswerteeinheit ist auch dazu eingerichtet ist, eine geschlossene Bahnkurve aus den erfassten X-Koordinaten und/oder den erfassten Y-Koordinaten zu ermitteln, und die Auswerteeinheit ist ferner dazu eingerichtet, auf der Grundlage der erfassten X-Koordinaten und/oder Y-Koordinaten eine Darstellung der Bahnkurve zu ermitteln, die durch den Drehwinkel der ersten oder zweiten Welle parametrisiert ist, der sich ausgehend von dem vorgegebenen Drehwinkel-Wert in Richtung des vorgegebenen Drehsinns bemisst.

Die erfindungsgemäße Vorrichtung zeichnet sich insbesondere dadurch aus, dass die Auswerteeinheit dazu eingerichtet ist, auf der Grundlage der erfassten X-Koordinaten und/oder Y-Koordinaten eine Darstellung der geschlossenen Bahnkurve zu ermitteln, die durch den Drehwinkel der ersten oder zweiten Welle parametrisiert ist, der sich ausgehend von dem vorgegebenen Drehwinkle-Wert in Richtung des vorgegebenen Drehsinns bemisst.

Daher kann, analog zu den bereits oben im Zusammenhang mit dem erfindungsgemäßen Verfahren dargelegten Gründen, mittels der erfindungsgemäßen Vorrichtung die Ermittlung einer Fehlausrichtung von zwei über eine Kupplung miteinander verbundenen Wellen auch in Situationen mit hoher Genauigkeit ermöglicht werden, in welchen eine Messung des Drehwinkels nicht oder nicht mit einer hinreichenden Genauigkeit möglich ist.

Bei einer bevorzugten Ausführungsform ist die geschlossene Bahnkurve eine Ellipse oder ein Kreis, und die Auswerteeinheit ist dazu eingerichtet, zum Ermitteln der durch den Drehwinkel der ersten oder zweiten Welle parametrisierten Bahnkurve ausschließlich nur die bei einer Drehung um 360 Grad erfassten Y-Koordinaten oder ausschließlich nur die bei einer Drehung um 360 Grad erfassten X-Koordinaten von wenigstens sechszehn Positionen des Laserlicht-Flecks zu verwenden, insbesondere einhergehend mit den bereits oben im Zusammenhang mit dem erfindungsgemäßen Verfahren dargelegten Vorteil, dass auch bei großen Schwankungen der X-Werte oder Y-Werte eine geschlossene Bahnkurve ermittelt bzw. bestimmt werden kann, die der Bahnkurve, die Laserlichtfleck ohne die Meßungenauigkeiten auf dem ebenen Messfeld beschreiben würde, sehr nahe kommt bzw. vorteilhaft nur sehr geringfügig von dieser abweicht. Die ermittelte geschlossenen Bahnkurve kann dann vorteilhaft in z.B. aus der DE 102 36 555 A1 bekannten Weise für eine präzise die Ermittlung einer eventuellen Fehlausrichtung der beiden Wellen verwendet werden.

Bei einer weiteren bevorzugten Ausführungsform ist die Auswerteeinheit dazu eingerichtet, eine geschlossene Bahnkurve in Form einer Ellipse oder eines Kreises durch Kurvenanpassung an die bei Drehung der ersten oder zweiten Welle um wenigstens 90 Grad und um weniger als 360 Grad oder um im wesentlichen 180 Grad erfassten X-Koordinaten und Y-Koordinaten von wenigstens drei Positionen des Laserlicht-Flecks zu ermitteln, und die Auswerteeinheit ist zum Ermitteln der parametrisierten Darstellung der Bahnkurve ferner dazu eingerichtet ist, jedem Punkt auf der Bahnkurve den sich von dem vorgegebenen Drehwinkel-Wert in Richtung des vorgegebenen Drehsinns aus zu bemessenden Drehwinkel zuzuordnen, einhergehend mit den bereits oben im Zusammenhang mit dem erfindungsgemäßen Verfahren dargelegten Vorteilen.

Kurzbeschreibung der Zeichnung

Nachfolgend werden Ausführungsbeispiele der Erfindung anhand der beigefügten Zeichnung näher erläutert. In der Zeichnung zeigen:

Fig. 1A      eine schematische Darstellung eines Ausführungsbeispiels einer erfindungsgemäßen Vorrichtung, zusammen mit zwei Wellen, die über eine Kupplung miteinander verbunden sind,

Fig. 1 B, C      jeweils eine schematische Darstellung einer bekannten Vorrichtung zum Ermitteln der Ausrichtung zweier Wellen, die über eine Kupplung miteinander verbunden sind, zusammen mit den Wellen und der Kupplung

Fig. 1D      eine schematische Stirnansicht einer Welle

Fig. 2        eine schematische Darstellung von auf einem Messfeld ausgebildeten Laserlicht-Flecken eines Lasers zusammen mit einer Ellipsenkurve

Fig. 3        eine schematische Darstellung einer durch einen Drehwinkel parametrisierten geschlossenen Bahnkurve in Form einer Ellipse,

Fig. 4A, B    jeweils eine schematische Darstellung zur Veranschaulichung eines Versatzes zweier Wellen zueinander,

Fig. 4C       jeweils eine schematische Darstellung zur Veranschaulichung eines Empfängers mit zwei ebenen Messfeldern,

Fig. 5        eine schematische Darstellung zur Veranschaulichung einer Messung mit zwei Messfeldern mittels der Vorrichtung nach Fig. 1B oder Fig. 1C,

Fig. 6        eine schematische Darstellung zur Veranschaulichung der Ermittlung des horizontalen und vertikalen Winkelversatzes und Parallelversatzes von zwei Wellen auf der Grundlage von erfassten Koordinaten eines Laserlicht-Flecks auf zwei Messfeldern,

Fig. 7A       eine Darstellung, in welcher die Y-Koordinaten eines ersten Messfelds über der Differenz der Y-Koordinaten zwischen einem zweiten und dem ersten Messfeld auftragen sind, zusammen mit einem Ellipsenfit,

Fig.7B        eine Darstellung erfasster Drehwinkel $\alpha$ Abhängigkeit von der Zeit T, und

Fig. 8        eine schematische Darstellung einer bekannten alternativen Vorrichtung zum Ermitteln der Ausrichtung zweier Wellen, die über eine Kupplung miteinander verbunden sind.

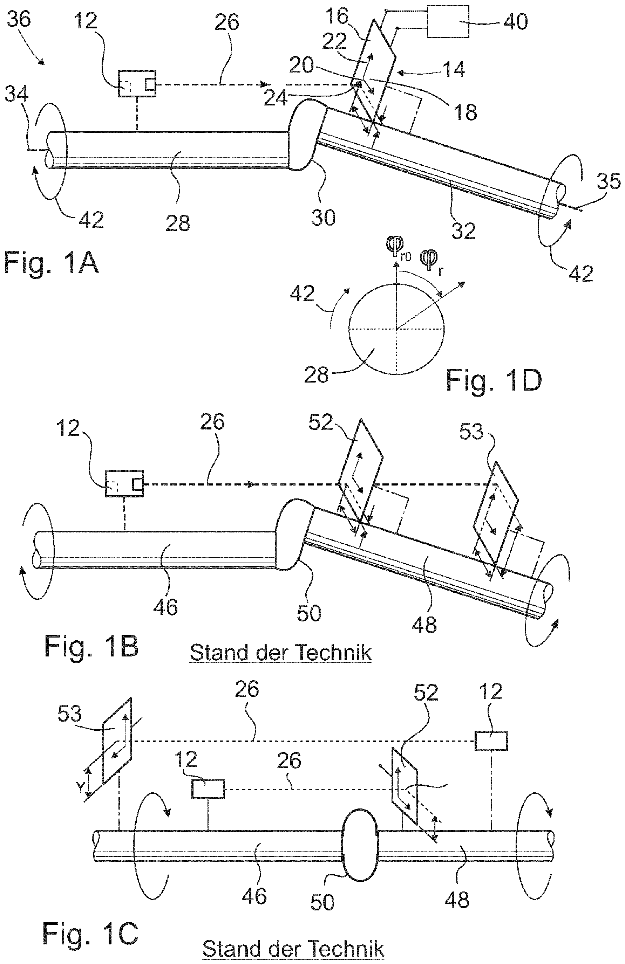

Die Vorrichtung 36 nach Fig. 1A zum Ermitteln einer geschlossenen Bahnkurve umfasst einen Laser 12, einen Laserlicht-Sensor 14 mit einem ebenen Messfeld 16 und eine Auswerteeinheit 40.

Das Messfeld 16 weist ein Koordinatensystem 18 mit einer X-Koordinatenachse 20 und einer zu der X-Koordinatenachse 20 rechtwinkeligen Y-Koordinatenachse 22 auf.

Der Laserlicht-Sensor 14 ist dazu eingerichtet, die X-Koordinate und Y-Koordinate der Positionen des Laserlicht-Flecks 24 des auf das Messfeld 16 auftreffenden Laserlichtstrahls 26 auf dem Messfeld 16 zu erfassen, der von dem Laser 12 erzeugbar ist.

Der Laser 12 ist drehfest mit einer ersten Welle 28 verbindbar, die über eine Kupplung 30 mit einer zweiten Welle 32 verbunden ist, so dass eine Drehung der ersten Welle 28 auf die zweite Welle 32 übertragbar ist und umgekehrt.

Das Messfeld 16 ist derart drehfest mit der zweiten Welle 32 verbindbar, dass die Y-Koordinatenachse 22 und die X-Koordinatenachse 20 im wesentlichen rechtwinkelig zur Drehachse 35 der zweiten Welle 32 orientiert sind.

Der Laser 12 ist derart ausrichtbar, dass der von dem Laser 12 erzeugbare Laserlichtstrahl 26 parallel zur Drehachse 34 der ersten Welle 28 ausgerichtet ist und auf das Messfeld 16 auftreffen kann.

Die erste oder zweite Welle 28, 32 ist durch manuelles Drehen oder manuelles Ansteuern derart steuerbar, dass die erste Welle 28 oder die zweite Welle 32 in einem vorgegebenen Drehsinn 42 drehbar ist - vgl. auch Fig. 1D, die eine schematische Stirnansicht der ersten Welle 28 von links zeigt. Gezeigt ist auch ein Drehwinkel $\varphi_r$ der ersten Welle 28, der sich ausgehend von einem vorgegebenen bzw. definierten Drehwinkel-Wert $\varphi_{r0}$ in Höhe von null Grad in Richtung des vorgegebenen Drehsinns 42 bemisst.

Die Auswerteeinheit 40 ist dazu eingerichtet, aus den bei einer Drehung der ersten oder zweiten Welle um wenigstens 90 Grad erfassten X-Koordinaten und Y-Koordinaten von wenigstens drei Positionen des Laserlicht-Flecks, welche der Laserlicht-Fleck bei der Drehung auf dem Messfeld einnimmt, die zeitlich zuerst erfasste X-Koordinate und die zeitlich zuerst erfasste Y-Koordinate zu ermitteln und diese zeitlich zuerst erfassten Koordinaten dem vorgegebenen Drehwinkel-Wert $\varphi_{r0}$ in Höhe von null Grad zuzuordnen.

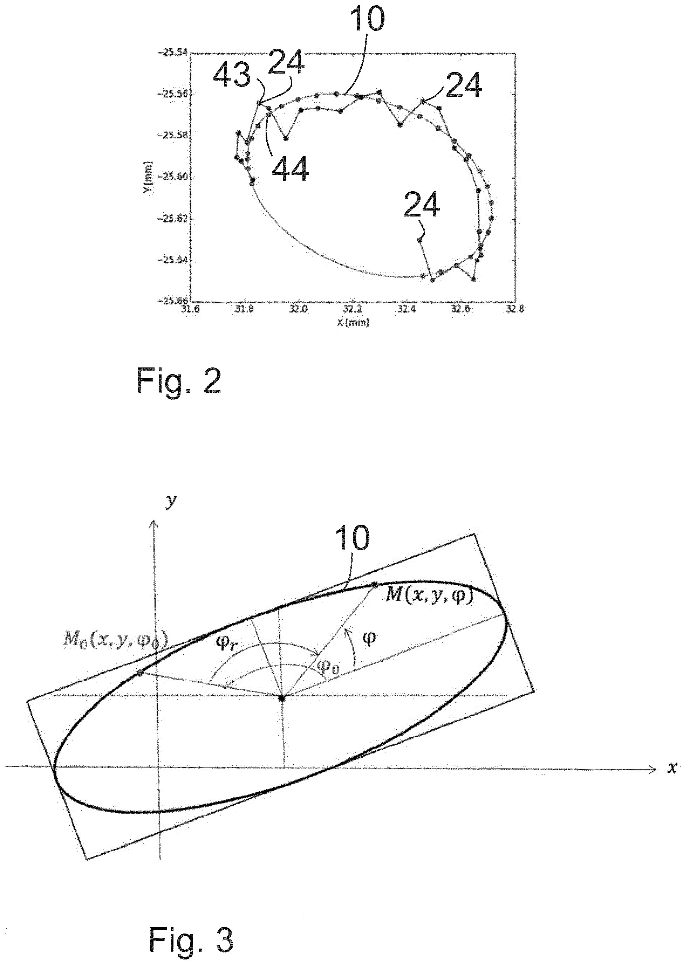

Ferner ist die die Auswerteeinheit dazu eingerichtet, eine geschlossene Bahnkurve (10) aus den erfassten X-Koordinaten und den erfassten Y-Koordinaten zu ermitteln und auf der Grundlage der erfassten X-Koordinaten und/oder Y-Koordinaten eine Darstellung der Bahnkurve 10 (vgl. Fig. 2 und 3) zu ermitteln, die durch den Drehwinkel $\varphi_r$ der ersten oder zweiten Welle (28, 32) parametrisiert ist, der sich ausgehend von dem vorgegebenen Drehwinkel-Wert $\varphi_{r0}$ in Höhe von null Grad in Richtung des vorgegebenen Drehsinns 42 bemisst.

Nachfolgend wird ein Ausführungsbeispiel des erfindungsgemäßen Verfahrens anhand der Fig. 1A erläutert.

Das zu erläuternde Verfahren zum Ermitteln einer geschlossenen Bahnkurve 10 (vgl. Fig. 2 und 3) mittels des Lasers 12 und des Laserlicht-Sensors 14 mit dem ebenen Messfeld (16) umfasst die folgenden Schritte:

(A) Drehfestes Verbinden des Lasers 12 mit der ersten Welle 28,

(B) Drehfestes Verbinden des Messfelds 16 mit der zweiten Welle 32, wobei das Messfeld 16 derart mit der zweiten Welle 32 verbunden wird, dass die Y-Koordinatenachse 22 und die X-Koordinatenachse 20 im wesentlichen rechtwinkelig zur Drehachse 35 der zweiten Welle 32 orientiert sind,

(C) Ausrichten des Lasers (12) derart, dass der von dem Laser (12) erzeugbare Laserlichtstrahl (26) parallel zur Drehachse (34) der ersten Welle (28) ausgerichtet ist und auf das Messfeld (16) auftreffen kann,

(D) Drehen der ersten Welle 28 in dem vorgegebenen Drehsinn 42 um ca. 245 Grad und Bestrahlen des Messfelds 16 mit dem Laserlichtstrahl 26 des Lasers (12) während des Drehens,

(E) Erfassen der X-Koordinaten und Y-Koordinaten von hier mehr als 30 Positionen des Laserlicht-Flecks 24 auf dem Messfeld 16 durch den Laserlicht-Sensor 14, welche der Laserlicht-Fleck 24 während des Drehens in Schritt D auf dem Messfeld 16 einnimmt,

(F) Ermitteln der zeitlich zuerst erfassten X-Koordinate und der zeitlich zuerst erfassten Y-Koordinate und Zuordnen des vorgegebenen Drehwinkel-Werts $\varphi_{r0}$ in Höhe von null Grad der zeitlich zuerst erfassten X-Koordinate und der zeitlich zuerst erfassten Y-Koordinate, und

(G) Ermitteln der geschlossenen Bahnkurve 10 mittels der in Schritt E erfassten X-Koordinaten und der in Schritt E erfassten Y-Koordinaten, wobei ferner auf der Grundlage der erfassten X-Koordinaten und Y-Koordinaten eine Darstellung der Bahnkurve (10) ermittelt wird, die durch den Drehwinkel $\varphi_r$ der ersten Welle 28 parametrisiert ist, der sich ausgehend von dem vorgegebenen Drehwinkel-Werts $\varphi_{r0}$ in Höhe von null Grad in Richtung des vorgegebenen Drehsinns 42 bemisst.

In Schritt G wird die geschlossene Bahnkurve 10 (vgl. Fig. 2) in Form einer Ellipse durch Kurvenanpassung an die erfassten X-Koordinaten und Y-Koordinaten ermittelt. Zum Ermitteln der parametrisierten Darstellung der Bahnkurve 10 (vgl. Fig. 3) wird jedem Punkt 44 auf der Bahnkurve 10 (vgl. Fig. 2) der sich von dem vorgegebenen Drehwinkel-Wert $\varphi_{r0}$ (vgl.

Fig. 1D) in Richtung des vorgegebenen Drehsinns 42 aus bemessende Drehwinkel $\varphi_r$ zugeordnet. Die Zuordnung erfolgt wie nachfolgend dargelegt.

Der Position 43 des Laserlicht-Flecks 24 auf dem Messfeld 16, die durch die zeitlich zuerst erfasste X-Koordinate und die durch die zeitlich zuerst erfasste Y-Koordinate definiert bzw. vorgegeben ist (vgl. Fig. 2), wird der Startwinkel $\varphi_{r0}$ mit dem Winkelwert null Grad zugeordnet. Ferner wird diese Position dem Punkt 44 auf der durch Kurvenanpassung ermittelten Ellipsenbahn zugeordnet wird, der den kleinsten Abstand zu der Ellipsenbahn aufweist. Auch die übrigen Positionen des Laserlicht-Flecks werden jeweils dem Punkt auf der durch Kurvenanpassung ermittelten Ellipsenbahn zugeordnet, der den kleinsten Abstand zu der Ellipsenbahn aufweist.

Die Fig. 3 veranschaulicht, wie beispielhaft ferner jeder erfassten Position des Laserlicht-Flecks 24 ein Punkt M (in Fig. 3 nicht der Punkt 34 sondern der Punkt M) auf der Ellipse zugeordnet wird, deren Winkellage zunächst noch nicht an den vorgegebenen Drehwinkel-Wert $\varphi_{r0}$ in Höhe von null Grad angepasst wurde. Zum Anpassen ist von dem Winkelwert $\varphi$ des Punkts M der Wert $\varphi 0$ abzuziehen, um den Winkel $\varphi_r$ zu bestimmen, der sich von dem Drehwinkel-Wert $\varphi_{r0}$ aus bemisst. Bei dem Winkel $\varphi 0$ handelt es sich um den berechneten Winkel des ersten Messpunktes bzw. um den berechneten Winkel der Position, die durch die zeitlich zuerst erfasste X-Koordinate und durch die zeitlich zuerst erfasste Y-Koordinate definiert ist.

Zur Durchführung des obigen Verfahrens ist die Auswerteeinheit 40 dazu eingerichtet, die geschlossene Bahnkurve 10 in Form der Ellipse durch Kurvenanpassung an die bei Drehung der ersten Welle 28 erfassten X-Koordinaten und Y-Koordinaten zu ermitteln. Ferner ist die Auswerteeinheit 40 zum Ermitteln der parametrisierten Darstellung der Bahnkurve 10 ferner dazu eingerichtet, jedem Punkt auf der Bahnkurve 10 den sich von dem vorgegebenen Drehwinkel-Wert $\varphi_{r0}$ in Richtung des vorgegebenen Drehsinns aus zu bemessenden Drehwinkel $\varphi_r$ zuzuordnen.

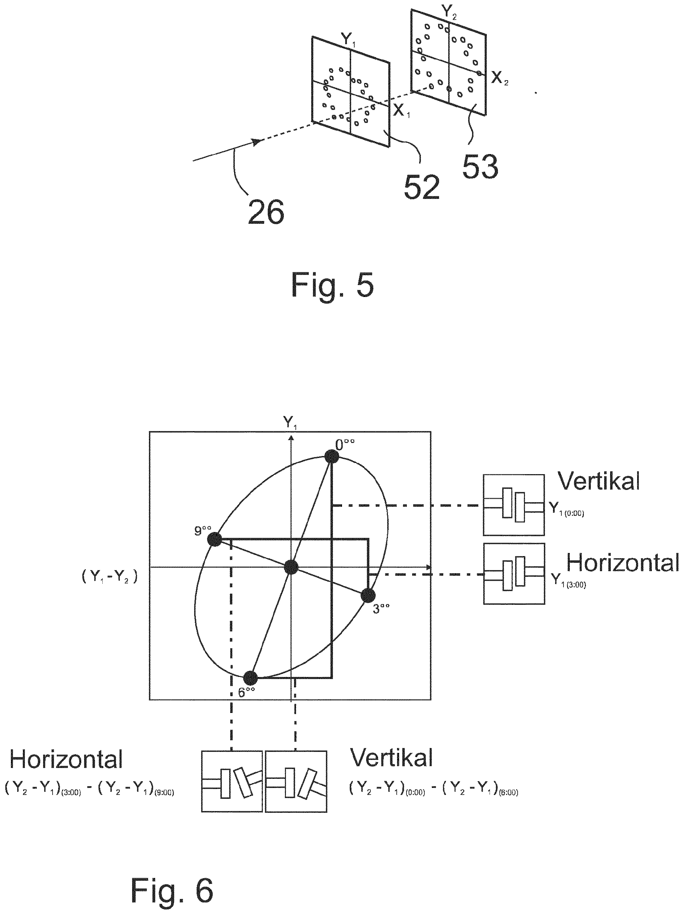

Die in Fig. 1B und C veranschaulichten bekannte Vorrichtungen zum Ermitteln der Ausrichtung zweier Wellen 46, 48, die über eine Kupplung 50 miteinander verbunden sind, verwenden jeweils zwei Messfelder 52, 53 zum Bestimmen des parallelen bzw. vertikalen Parallelversatzes und Horizontalversatzes, wobei hierfür, wie in Fig. 6 veranschaulicht, jeweils die Y1-Koodinaten des Messfelds 52 über der Differenz Y2- Y1 parametrisiert durch den Drehwinkel aufgetragen wird (Y2 ist die erfasste Y-Koordinate des Messfelds 53 - vgl. auch Fig. 5). Bei der bekannte Vorrichtung nach Fig. 1C wird ferner ein zusätzlicher Laser 12 verwendet.

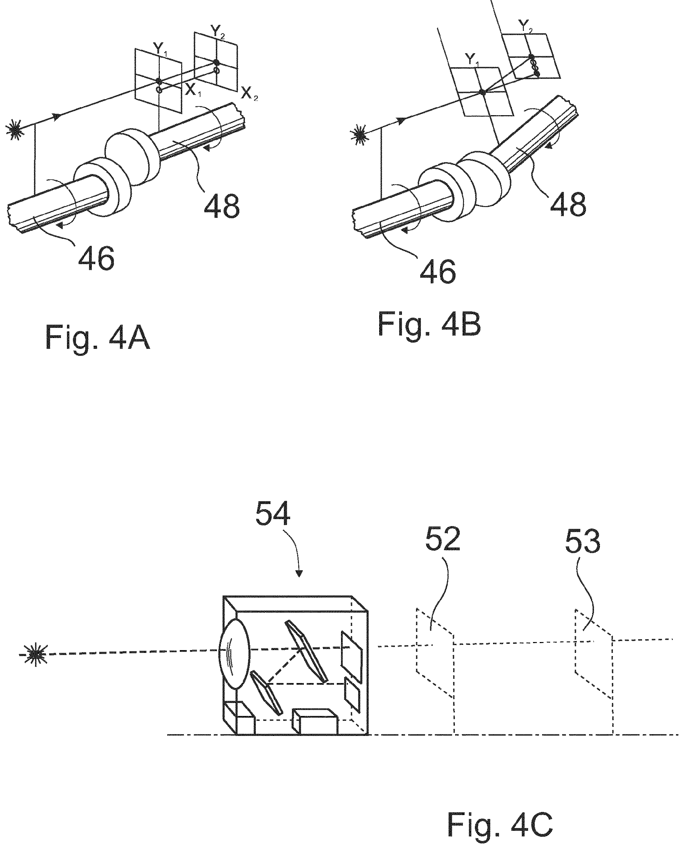

Bei der Vorrichtung nach Fig. 1B ist das Messfeld 53 mittels einer an sich bekannten Strahlungsteileroptik 54 (vgl. Figur 4C) virtuell in Längsrichtung der Welle 48 (bzw. in Richtung der Drehachse der Welle 48) von dem Messfeld

EP 2 950 046 B1

52 beabstandet angeordnet.

Der Fig. 6 ist auch zu entnehmen, wie in bekannter Weise auf der Grundlage der so in Abhängigkeit vom Drehwinkel aufgetragenen Y-Koordinaten die jeweiligen unterschiedlichen Versätze (vgl. auch Fig. 4A und 4B) unter Heranziehung der jeweiligen Werte in der 0Uhr-Position, 3Uhr-Position, 6Uhr-Position und 9Uhr-Position berechnet werden können, wobei für die Drehwinkelabhängigkeit bei den bekannten Vorrichtungen auf eine Messung durch ein Inklinometer zurückgegriffen wird. Ein Versatz der beiden Wellen 28, 32 ist in der Fig. 1A schematisch veranschaulicht, weist jedoch in der Fig. 1A zur Verdeutlichung ein wesentlich höheres Maß auf, als in der konkreten Praxis zu erwarten ist. Dies gilt entsprechend auch für die Figuren 1B, 4A und 4BC.

Mittels des erfindungsgemäßen Verfahrens kann jedoch vorteilhaft auf eine ohne Inklinometermessung bereitgestellte Bahnkurve in Form einer Ellipse zurückgegriffen werden, welche die Y1-Koordinaten in Abhängigkeit vom Drehwinkel $\varphi_r$ parametrisiert bzw. darstellt. Diese Abhängigkeit kann dann auch auf die Y2-Koordinaten übertragen werden bzw. die Abhängigkeit der Y1-Koordinaten und Y2-Koordinaten von dem Drehwinkel $\varphi_r$ ist infolge des Meßprinzips gemäß den Figuren 1B und 1C für beide Messfelder 52 und 53 gleich. Vorzugsweise wird daher für beide Messfelder 52, 53 die Kurvenanpassung vorgenommen und diejenige Bahnkurve dem Bestimmen der Versätze zugrundegelegt, bei welcher die Positionen des Laserlicht-Flecks die geringste Streuung in Bezug auf die Bahnkurve aufweisen.

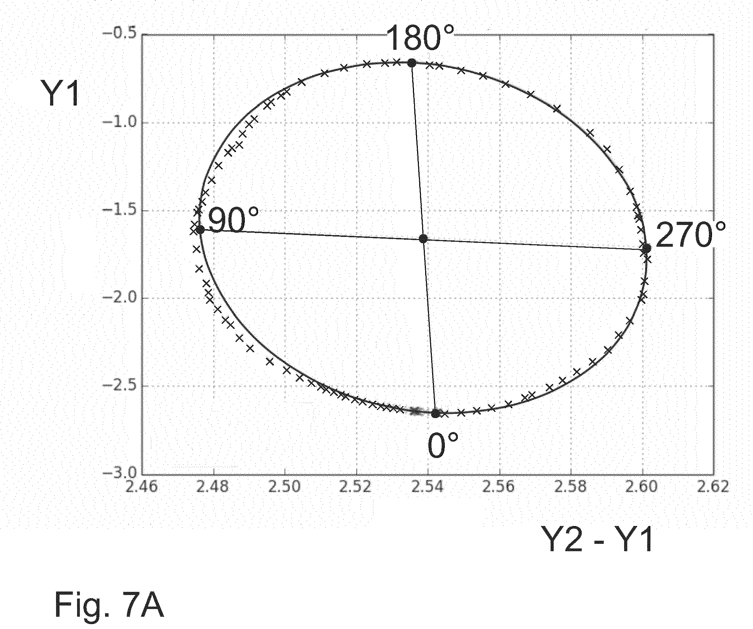

Die Fig. 7A zeigt eine Darstellung, in welcher die Y1-Koordinaten des Messfelds 52 über der Differenz der Y2-Y1 zusammen mit einer Kurvenanpassung in Form eines Ellipsenfits aufgetragen sind. Die hier veranschaulichten Positionen des Laserlicht-Flecke wurden in bekannter Weise durch eine Messung gewonnen, bei welcher der Drehwinkel einer der beiden Wellen mittels eines Inklinometers gemessen wurde. Die Standardabweichung der Positionen bzw. Meßpunkte von dem Ellipsenfit betrug hier 7,3 $\mu$m, was für eine gute Messung spricht. Allerdings konnte mittels der Ausführungsformen des erfindungsgemäßen Verfahrens, die auf der Kurvenanpassung bzw. einer ausschließlichen Verwendung von X-Koordinaten oder einer ausschließlichen Verwendung von Y-Koordinaten basieren die Standardabweichung vorteilhaft bei Messungen auf 5,2 $\mu$m bzw. 1,1 $\mu$m reduziert werden.

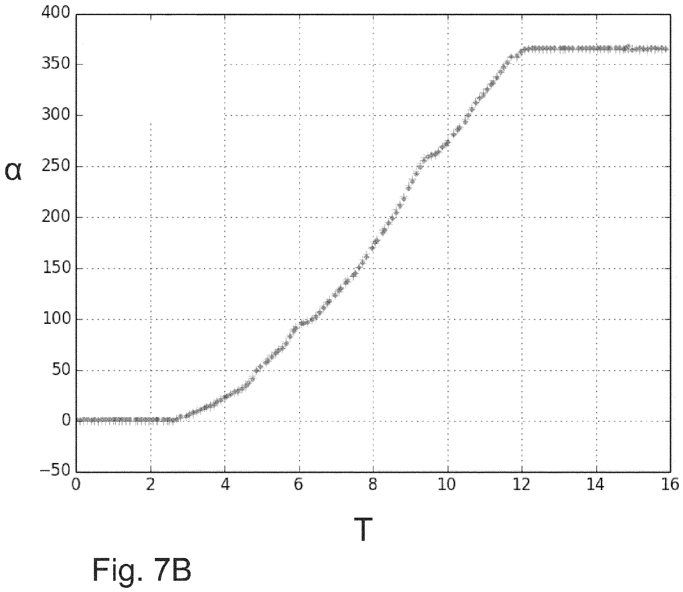

Die Fig. 7B zeigt eine Darstellung erfasster Drehwinkel $\alpha$ in Abhängigkeit von der Zeit, die beim Bestimmen des Drehwinkels auf der Grundlage eines Inklinometers, auf der Grundlage der Ausführungsform des erfindungsgemäßen Verfahrens, das auf der Kurvenanpassung basiert und auf der Grundlage der Ausführungsform des erfindungsgemäßen Verfahrens, das auf der ausschließlichen Verwendung von X-Koordinaten oder der ausschließlichen Verwendung von Y-Koordinaten basiert, ermittelt wurden. Alle mit diesen unterschiedlichen Methoden ermittelten Drehwinkel liegen vorteilhaft sehr nahe beinander, was insbesondere zeigt, dass auch ohne Inklinometer zuverlässig gearbeitet werden kann.

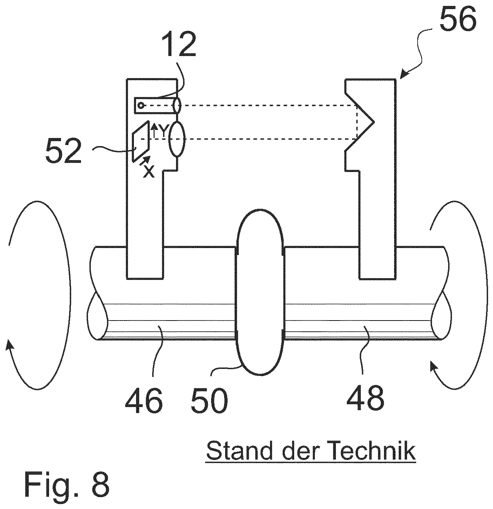

Die Fig. 8 zeigt eine schematische Darstellung einer bekannten alternativen Vorrichtung mit einem Spiegelprisma 56 zum Ermitteln der Ausrichtung zweier Wellen, die über eine Kupplung miteinander verbunden sind. Auch mit dieser z.B. aus der DE 102 36 555 A1 bekannten alternativen Vorrichtung kann das in Schritt F Dargelegte verwirklicht werden, wonach durch die mittels des Messfelds 52 erfassten X-Koordinaten und/oder erfassten Y-Koordinaten eine geschlossene Bahnkurve ermittelt wird und ferner auf der Grundlage der erfassten X-Koordinaten und/oder der erfassten Y-Koordinaten eine Darstellung der Bahnkurve ermittelt wird, die durch den Drehwinkel der ersten oder zweiten Welle 46, 48 parametrisiert ist, der sich ausgehend von dem vorgegebenen Drehwinkel-Wert in Richtung des vorgegebenen Drehsinns bemisst.

Insbesondere die obigen Ausführungsformen des erfindungsgemäßen Verfahrens, die auf der Kurvenanpassung bzw. einer ausschließlichen Verwendung von X-Koordinaten oder einer ausschließlichen Verwendung von Y-Koordinaten basieren, können an dieser bekannten alternativen Vorrichtung verwirklicht bzw. durchgeführt werden.

Bezugszeichenliste

| | |
|---|---|
| 10 | Bahnkurve |
| 12 | Laser |
| 14 | Laserlicht-Sensor |
| 16 | Messfeld |
| 18 | Koordinatensystem |
| 20 | X-Koordinatenachse |
| 22 | Y-Koordinatenachse |
| 24 | Laserlicht-Fleck |
| 26 | Laserlichtstrahl |
| 28 | erste Welle |
| 30 | Kupplung |
| 32 | zweite Welle |

34 Drehachse
35 Drehachse
36 Vorrichtung
40 Auswerteeinheit
42 Drehsinn
43 Position
44 Punkt
46 Welle
48 Welle
50 Kupplung
52 Messfeld
53 Messfeld
54 Strahlungsteileroptik
56 Spiegelprisma

**Patentansprüche**

1. Verfahren zum Ermitteln einer geschlossenen Bahnkurve (10) mittels eines Lasers (12) und eines Laserlicht-Sensors (14) mit einem ebenen Messfeld (16),
   wobei das Messfeld (16) ein Koordinatensystem (18) mit einer X-Koordinatenachse (20) und einer zu der X-Koordinatenachse (20) rechtwinkeligen Y-Koordinatenachse (22) aufweist, wobei der Laserlicht-Sensor (14) dazu eingerichtet ist, die X-Koordinate und Y-Koordinate der Position des Laserlicht-Flecks (24) des auf das Messfeld (16) auftreffenden Laserlichtstrahls (26) des Lasers (12) auf dem Messfeld (16) zu erfassen,
   wobei das Verfahren die folgenden Schritte umfasst:

   (A) Drehfestes Verbinden des Lasers (12) mit einer ersten Welle (28), die über eine Kupplung (30) mit einer zweiten Welle (32) verbunden ist, so dass eine Drehung der ersten Welle (28) auf die zweite Welle (32) übertragbar ist und umgekehrt,
   (B) Drehfestes Verbinden des Messfelds (16) mit der zweiten Welle (32), wobei das Messfeld (16) derart mit der zweiten Welle (32) verbunden wird, dass die Y-Koordinatenachse (22) und die X-Koordinatenachse (20) im wesentlichen rechtwinkelig zur Drehachse (35) der zweiten Welle (32) orientiert sind,
   (C) Ausrichten des Lasers (12) derart, dass der von dem Laser (12) erzeugbare Laserlichtstrahl (26) parallel zur Drehachse (34) der ersten Welle (28) ausgerichtet ist und auf das Messfeld (16) auftreffen kann,
   (D) Drehen der ersten oder zweiten Welle (28, 32) in einem vorgegebenen Drehsinn (42) um wenigstens 90 Grad und Bestrahlen des Messfelds (16) mit dem Laserlichtstrahl (26) des Lasers (12) während des Drehens,
   (E) Erfassen der X-Koordinaten und Y-Koordinaten von wenigstens drei Positionen des Laserlicht-Flecks (24) auf dem Messfeld (16) durch den Laserlicht-Sensor (14), welche der Laserlicht-Fleck (24) während des Drehens in Schritt (D) auf dem Messfeld (16) einnimmt,
   (F) Ermitteln der zeitlich zuerst erfassten X-Koordinate und der zeitlich zuerst erfassten Y-Koordinate und Zuordnen eines vorgegebenen Drehwinkel-Werts der zeitlich zuerst erfassten X-Koordinate und der zeitlich zuerst erfassten Y-Koordinate,
   (G) Ermitteln der geschlossenen Bahnkurve (10) mittels der in Schritt (E) erfassten X-Koordinaten und/oder der in Schritt (E) erfassten Y-Koordinaten,

   wobei in Schritt (G) ferner auf der Grundlage der erfassten X-Koordinaten und/oder der erfassten Y-Koordinaten eine Darstellung der Bahnkurve (10) ermittelt wird, die durch den Drehwinkel der ersten oder zweiten Welle (28, 32) parametrisiert ist, der sich ausgehend von dem vorgegebenen Drehwinkel-Wert in Richtung des vorgegebenen Drehsinns bemisst.

2. Verfahren nach Anspruch 1, **dadurch gekennzeichnet, dass** der vorgegebene Drehwinkel-Wert, welcher in Schritt (F) der zeitlich zuerst erfassten X-Koordinate und der zeitlich zuerst erfassten Y-Koordinate zugeordnet wird, null Grad beträgt.

3. Verfahren nach Anspruch 1 oder 2, **dadurch gekennzeichnet, dass** die geschlossene Bahnkurve (10) eine Ellipse oder ein Kreis ist.

4. Verfahren nach Anspruch 1 oder 2, **dadurch gekennzeichnet, dass** in Schritt (D) die erste oder zweite Welle (28, 32) um 360 Grad gedreht wird und in Schritt (E) die X-Koordinaten und Y-Koordinaten von wenigstens sechzehn Positionen des Laserlicht-Flecks (24) auf dem Messfeld (16) erfasst werden, dass in Schritt (G) eine geschlossene und durch den Drehwinkel der ersten oder zweiten Welle (28, 32) parametrisierte Bahnkurve (10) in Form einer Ellipse oder eines Kreises ermittelt wird, wobei zum Ermitteln der parametrisierten Bahnkurve (10) ausschließlich nur die erfassten Y-Koordinaten oder ausschließlich nur die erfassten X-Koordinaten verwendet werden.

5. Verfahren nach Anspruch 1 oder 2, **dadurch gekennzeichnet, dass** in Schritt (D) die erste oder zweite Welle (28, 32) um wenigstens 90 Grad und um weniger als 360 Grad oder um im wesentlichen 180 Grad gedreht wird, wobei in Schritt (E) die X-Koordinaten und Y-Koordinaten von wenigstens drei Positionen des Laserlicht-Flecks (24) auf dem Messfeld (16) erfasst werden, wobei in Schritt (G) eine geschlossene Bahnkurve (10) in Form einer Ellipse oder eines Kreises durch Kurvenanpassung an die erfassten X-Koordinaten und Y-Koordinaten ermittelt wird, und wobei zum Ermitteln der parametrisierten Darstellung der Bahnkurve (10) jedem Punkt auf der Bahnkurve (10) der sich von dem vorgegebenen Drehwinkel-Wert in Richtung des vorgegebenen Drehsinns aus bemessende Drehwinkel zugeordnet wird.

6. Verfahren nach einem der vorangehenden Ansprüche, **dadurch gekennzeichnet, dass** die Schritte (E) bis (G) automatisiert vorgenommen werden.

7. Vorrichtung (36) zum Ermitteln einer geschlossenen Bahnkurve (10), wobei die Vorrichtung (36) einen Laser (12), einen Laserlicht-Sensor (14) mit einem ebenen Messfeld (16), und eine Auswerteeinheit (40) aufweist,

wobei das Messfeld (16) ein Koordinatensystem (18) mit einer X-Koordinatenachse (20) und einer zu der X-Koordinatenachse (20) rechtwinkeligen Y-Koordinatenachse (22) aufweist, wobei der Laserlicht-Sensor (14) dazu eingerichtet ist, die X-Koordinate und Y-Koordinate der Position des Laserlicht-Flecks (24) des auf das Messfeld (16) auftreffenden Laserlichtstrahls (26) auf dem Messfeld (16) zu erfassen, der von dem Laser (12) erzeugbar ist,
wobei der Laser (12) drehfest mit einer ersten Welle (28) verbindbar ist, die über eine Kupplung (30) mit einer zweiten Welle (32) verbunden ist, so dass eine Drehung der ersten Welle (28) auf die zweite Welle (32) übertragbar ist und umgekehrt,
wobei das Messfeld (16) derart drehfest mit der zweiten Welle (32) verbindbar ist, dass die Y-Koordinatenachse (22) und die X-Koordinatenachse (20) im wesentlichen rechtwinkelig zur Drehachse (35) der zweiten Welle (32) orientiert sind, und
wobei der Laser (12) derart ausrichtbar ist, dass der von dem Laser (12) erzeugbare Laserlichtstrahl (26) parallel zur Drehachse (34) der ersten Welle (28) ausgerichtet ist und auf das Messfeld (16) auftreffen kann,

wobei die Auswerteeinheit (40) dazu eingerichtet ist, aus den bei einer Drehung der ersten oder zweiten Welle um wenigstens 90 Grad erfassten X-Koordinaten und Y-Koordinaten von wenigstens drei Positionen des Laserlicht-Flecks, welche der Laserlicht-Fleck bei der Drehung auf dem Messfeld einnimmt, die zeitlich zuerst erfasste X-Koordinate und die zeitlich zuerst erfasste Y-Koordinate zu ermitteln und diese zeitlich zuerst erfassten Koordinaten einem vorgegebenen Drehwinkel-Wert zuzuordnen,
wobei die Auswerteeinheit dazu eingerichtet ist, eine geschlossene Bahnkurve (10) aus den erfassten X-Koordinaten und/oder den erfassten Y-Koordinaten zu ermitteln, und
wobei die Auswerteeinheit (40) ferner dazu eingerichtet ist, auf der Grundlage der erfassten X-Koordinaten und/oder Y-Koordinaten eine Darstellung der Bahnkurve (10) zu ermitteln, die durch den Drehwinkel der ersten oder zweiten Welle (28, 32) parametrisiert ist, der sich ausgehend von dem vorgegebenen Drehwinkel-Wert in Richtung des vorgegebenen Drehsinns bemisst.

8. Vorrichtung (36) nach Anspruch 7, **dadurch gekennzeichnet, dass** die geschlossene Bahnkurve (10) eine Ellipse oder ein Kreis.

9. Vorrichtung (36) nach Anspruch 7, **dadurch gekennzeichnet, dass** die geschlossene Bahnkurve (10) eine Ellipse oder ein Kreis ist, und dass die Auswerteeinheit (40) dazu eingerichtet ist, zum Ermitteln der durch den Drehwinkel der ersten oder zweiten Welle (28, 32) parametrisierten Bahnkurve (10) ausschließlich nur die bei einer Drehung um 360 Grad erfassten Y-Koordinaten oder ausschließlich nur die bei einer Drehung um 360 Grad erfassten X-Koordinaten von wenigstens sechzehn Positionen des Laserlicht-Flecks zu verwenden.

10. Vorrichtung nach Anspruch 7, **dadurch gekennzeichnet, dass** die Auswerteeinheit (40) dazu eingerichtet ist, eine geschlossene Bahnkurve (10) in Form einer Ellipse oder eines Kreises durch Kurvenanpassung an die bei Drehung der ersten oder zweiten Welle (28, 32) um wenigstens 90 Grad und um weniger als 360 Grad oder um im wesentlichen 180 Grad erfassten X-Koordinaten und Y-Koordinaten von wenigstens drei Positionen des Laserlicht-Flecks zu ermitteln, und dass die Auswerteeinheit (40) zum Ermitteln der parametrisierten Darstellung der Bahnkurve (10) ferner dazu eingerichtet ist, jedem Punkt auf der Bahnkurve (10) den sich von dem vorgegebenen Drehwinkel-Wert in Richtung des vorgegebenen Drehsinns aus zu bemessenden Drehwinkel zuzuordnen.

**Claims**

1. Method for determining a closed trajectory (10) by means of a laser (12) and a laser light sensor (14) with a planar measuring field (16),
   wherein the measuring field (16) has a system of coordinates (18) with an X coordinate axis (20) and a Y coordinate axis (22) at right angles to the X coordinate axis (20), the laser light sensor (14) being designed for sensing on the measuring field (16) the X coordinate and Y coordinate of the position of the laser light spot (24) of the laser light beam (26) of the laser (12) impinging on the measuring field (16),
   the method comprising the following steps:

   (A) rotationally fixed linking of the laser (12) to a first shaft (28), which is connected to a second shaft (32) via a coupling (30), so that a rotation of the first shaft (28) can be transmitted to the second shaft (32) and vice versa,
   (B) rotationally fixed linking of the measuring field (16) to the second shaft (32), the measuring field (16) being linked to the second shaft (32) in such a way that the Y coordinate axis (22) and the X coordinate axis (20) are oriented substantially at right angles to the axis of rotation (35) of the second shaft (32),
   (C) alignment of the laser (12) in such a way that the laser light beam (26) that can be generated by the laser (12) is aligned parallel to the axis of rotation (34) of the first shaft (28) and can impinge on the measuring field (16),
   (D) rotation of the first or second shaft (28, 32) in a predetermined direction of rotation (42) by at least 90 degrees and irradiation of the measuring field (16) with the laser light beam (26) of the laser (12) during the rotation,
   (E) sensing by the laser light sensor (14) of the X coordinates and Y coordinates of at least three positions of the laser light spot (24) on the measuring field (16) that the laser light spot (24) assumes on the measuring field (16) during the rotation in step (D),
   (F) determination of the X coordinate sensed first in time and the Y coordinate sensed first in time and assignment of a predetermined value of the angle of rotation to the X coordinate sensed first in time and to the Y coordinate sensed first in time,
   (G) determination of the closed trajectory (10) by means of the X coordinates sensed in step (E) and/or the Y coordinates sensed in step (E);

   wherein, in step (G), furthermore the sensed X coordinates and/or the sensed Y coordinates are used as a basis for determining a representation of the trajectory (10) which is parameterized by the angle of rotation of the first or second shaft (28, 32) that is measured in the direction of the predetermined direction of rotation, starting from the predetermined value of the angle of rotation.

2. Method according to Claim 1, **characterized in that** the predetermined value of the angle of rotation that is assigned in step (F) to the X coordinate sensed first in time and to the Y coordinate sensed first in time is zero degrees.

3. Method according to Claim 1 or 2, **characterized in that** the closed trajectory (10) is an ellipse or a circle.

4. Method according to Claim 1 or 2, **characterized in that**, in step (D), the first or second shaft (28, 32) is rotated by 360 degrees and, in step (E), the X coordinates and Y coordinates of at least sixteen positions of the laser light spot (24) on the measuring field (16) are sensed, **in that**, in step (G), a closed trajectory (10), which is parameterized by the angle of rotation of the first or second shaft (28, 32), is determined in the form of an ellipse or a circle, exclusively only the sensed Y coordinates or exclusively only the sensed X coordinates being used for determining the parameterized trajectory (10).

5. Method according to Claim 1 or 2, **characterized in that**, in step (D), the first or second shaft (28, 32) is rotated by at least 90 degrees and by less than 360 degrees or by substantially 180 degrees, wherein, in step (E), the X coordinates and Y coordinates of at least three positions of the laser light spot (24) on the measuring field (16) are sensed, wherein, in step (G), a closed trajectory (10) is determined in the form of an ellipse or a circle by curve fitting to the sensed X coordinates and Y coordinates, and wherein, for determining the parameterized representation of the trajectory (10), the angle of rotation measured from the predetermined value of the angle of rotation in the direction of the predetermined direction of rotation is assigned to each point on the trajectory (10).

6. Method according to one of the preceding claims, **characterized in that** steps (E) to (G) are performed in an automated manner.

7. Device (36) for determining a closed trajectory (10), the device (36) having a laser (12), a laser light sensor (14) with a planar measuring field (16) and an evaluation unit (40),

   wherein the measuring field (16) has a system of coordinates (18) with an X coordinate axis (20) and a Y coordinate axis (22) at right angles to the X coordinate axis (20), the laser light sensor (14) being designed for sensing on the measuring field (16) the X coordinate and Y coordinate of the position of the laser light spot (24) of the laser light beam (26) impinging on the measuring field (16) that can be generated by the laser (12),
   wherein the laser (12) can be linked in a rotationally fixed manner to a first shaft (28), which is connected to a second shaft (32) via a coupling (30), so that a rotation of the first shaft (28) can be transmitted to the second shaft (32) and vice versa,
   wherein the measuring field (16) can be linked in a rotationally fixed manner to the second shaft (32) in such a way that the Y coordinate axis (22) and the X coordinate axis (20) are oriented substantially at right angles to the axis of rotation (35) of the second shaft (32), and
   wherein the laser (12) can be aligned in such a way that the laser light beam (26) that can be generated by the laser (12) is aligned parallel to the axis of rotation (34) of the first shaft (28) and can impinge on the measuring field (16),

   wherein the evaluation unit (40) is designed to determine the X coordinate sensed first in time and the Y coordinate sensed first in time from the X coordinates and Y coordinates of at least three positions of the laser light spot that the laser light spot assumes on the measuring field during rotation when there is a rotation of the first or second shaft by at least 90 degrees and to assign these coordinates sensed first in time to a predetermined value of the angle of rotation,
   wherein the evaluation unit is designed to determine a closed trajectory (10) from the sensed X coordinates and/or the sensed Y coordinates, and
   wherein the evaluation unit (40) is also designed to determine on the basis of the sensed X coordinates and/or Y coordinates a representation of the trajectory (10) which is parameterized by the angle of rotation of the first or second shaft (28, 32) that is measured in the direction of the predetermined direction of rotation, starting from the predetermined value of the angle of rotation.

8. Device (36) according to Claim 7, **characterized in that** the closed trajectory (10) is an ellipse or a circle.

9. Device (36) according to Claim 7, **characterized in that** the closed trajectory (10) is an ellipse or a circle, and **in that** the evaluation unit (40) is designed to use exclusively only the Y coordinates sensed for a rotation of 360 degrees or exclusively only the X coordinates sensed for a rotation of 360 degrees of at least sixteen positions of the laser light spot for determining the trajectory (10) parameterized by the angle of rotation of the first or second shaft (28, 32).

10. Device according to Claim 7, **characterized in that** the evaluation unit (40) is designed to determine a closed trajectory (10) in the form of an ellipse or a circle by curve fitting to the X coordinates and Y coordinates of at least three positions of the laser light spot when there is a rotation of the first or second shaft (28, 32) by at least 90 degrees and by less than 360 degrees or by substantially 180 degrees, and **in that**, for determining the parameterized representation of the trajectory (10), the evaluation unit (40) is also designed to assign the angle of rotation measured from the predetermined value of the angle of rotation in the direction of the predetermined direction of rotation to each point on the trajectory (10).

**Revendications**

1. Procédé permettant de déterminer une trajectoire fermée (10) au moyen d'un laser (12) et d'un capteur de lumière laser (14) ayant un champ de mesure plan (16), dans lequel le champ de mesure (16) présente un système de coordonnées (18) ayant un axe de coordonnées X (20) et un axe de coordonnées Y (22) perpendiculaire à l'axe de coordonnées X (20), dans lequel le capteur de lumière laser (14) est conçu pour détecter sur le champ de mesure (16) la coordonnée X et la coordonnée Y de la position du point lumineux laser (24) du faisceau lumineux laser (26) du laser (12) incident sur le champ de mesure (16),

dans lequel le procédé comprend les étapes suivantes :

(A) relier de manière fixe en rotation le laser (12) à un premier arbre (28) qui est relié par l'intermédiaire d'un accouplement (30) à un deuxième arbre (32) de manière à ce que la rotation du premier arbre (28) puisse être transmise au deuxième arbre (32) et inversement,

(B) relier de manière fixe en rotation le champ de mesure (16) au deuxième arbre (32), dans lequel le champ de mesure (16) est relié au deuxième arbre (32) de manière à ce que l'axe de coordonnées Y (22) et l'axe de coordonnées X (20) soient orientés sensiblement perpendiculairement à l'axe de rotation (35) du deuxième arbre (32),

(C) aligner le laser (12) de manière à ce que le faisceau lumineux laser (26) pouvant être généré par le laser (12) soit aligné parallèlement à l'axe de rotation (34) du premier arbre (28) et puisse être incident sur le champ de mesure (16),

(D) faire tourner le premier ou le deuxième arbre (28, 32) dans un sens de rotation prédéterminé (42) d'au moins 90 degrés et exposer le champ de mesure (16) au faisceau lumineux laser (26) du laser (12) pendant la rotation,

(E) détecter au moyen du capteur laser (14) les coordonnées X et les coordonnées Y d'au moins trois positions du point lumineux laser (24) qui sont occupées par le point lumineux laser (24) sur le champ de mesure (16) pendant la rotation lors de l'étape (D) sur le champ de mesure (16),

(F) déterminer la coordonnée X détectée en premier dans le temps et la coordonnée Y détectée en premier dans le temps et associer une valeur d'angle de rotation prédéterminée à la coordonnée X détectée en premier dans le temps et à la coordonnée Y détectée en premier dans le temps,

(G) déterminer la trajectoire fermée (10) au moyen des coordonnées X détectées lors de l'étape (E) et/ou des coordonnées Y détectées lors de l'étape (E),

dans lequel, lors de l'étape (G), une représentation de la trajectoire (10) est en outre déterminée sur la base des coordonnées X détectées et/ou des coordonnées Y détectées, laquelle représentation est paramétrée par l'angle de rotation du premier ou du deuxième arbre (28, 32), qui est mesuré à partir de la valeur d'angle de rotation prédéterminée dans la direction du sens de rotation prédéterminé.

2. Procédé selon la revendication 1, **caractérisé en ce que** la valeur d'angle de rotation prédéterminée associée lors de l'étape (F) à la coordonnée X détectée en premier dans le temps et à la coordonnée Y détectée en premier dans le temps est de zéro degré.

3. Procédé selon la revendication 1 ou 2, **caractérisé en ce que** la trajectoire fermée (10) est une ellipse ou un cercle.

4. Procédé selon la revendication 1 ou 2, **caractérisé en ce que**, lors de l'étape (D), le premier ou le deuxième arbre (28, 32) est tourné de 360 degrés et **en ce que**, lors de l'étape (E), les coordonnées X et les coordonnées Y d'au moins seize positions du point lumineux du laser (24) sur le champ de mesure (16) sont détectées, **en ce que**, lors de l'étape (G), une trajectoire fermée (10) sous forme d'ellipse ou de cercle, paramétrée par l'angle de rotation du premier ou du deuxième arbre (28, 32), est déterminée, dans lequel seules les coordonnées Y détectées ou seules les coordonnées X détectées sont utilisées pour déterminer la trajectoire (10) paramétrée.

5. Procédé selon la revendication 1 ou 2, **caractérisé en ce que**, lors de l'étape (D), le premier ou le deuxième arbre (28, 32) est tourné d'au moins 90 degrés et de moins de 360 degrés ou de sensiblement 180 degrés, dans lequel, lors de l'étape (E), les coordonnées X et les coordonnées Y d'au moins trois positions du point lumineux laser (24) sur le champ de mesure (16) sont détectées, dans lequel, lors de l'étape (G), une trajectoire fermée (10) sous la forme d'une ellipse ou d'un cercle est déterminée par un ajustement de courbe aux coordonnées X détectées et aux coordonnées Y détectées, et dans lequel, pour déterminer la représentation paramétrée de la trajectoire (10), un angle de rotation est associé à chaque point de la trajectoire (10) qui est mesuré à partir de la valeur d'angle de rotation prédéterminée dans la direction du sens de rotation prédéterminé.

6. Procédé selon l'une des revendications précédentes, **caractérisé en ce que** les étapes (E) à (G) sont effectuées automatiquement.

7. Dispositif (36) permettant de déterminer une trajectoire fermée (10), dans lequel le dispositif (36) comprend un laser (12), un capteur de lumière laser (14) ayant un champ de mesure plan (16), et une unité d'évaluation (40), dans lequel le champ de mesure (16) présente un système de coordonnées (18) ayant un axe de coordonnées X

**EP 2 950 046 B1**

(20) et un axe de coordonnées Y (22) perpendiculaire à l'axe de coordonnées X (20), dans lequel le capteur de lumière laser (14) est conçu pour détecter sur le champ de mesure (16) la coordonnée X et la coordonnée Y de la position du point lumineux laser (24) du faisceau lumineux laser (26) incident sur le champ de mesure (16), qui peut être généré par le laser (12),

dans lequel le laser (12) peut être relié de manière fixe en rotation à un premier arbre (28) qui est relié à un deuxième arbre (32) par l'intermédiaire d'un accouplement (30) de manière à ce que la rotation du premier arbre (28) puisse être transmise au deuxième arbre (32) et inversement,

dans lequel le champ de mesure (16) peut être relié de manière fixe en rotation au deuxième arbre (32) de manière à ce que l'axe de coordonnées Y (22) et l'axe de coordonnées X (20) soient orientés sensiblement perpendiculairement à l'axe de rotation (35) du deuxième arbre (32), et

dans lequel le laser (12) peut être aligné de manière à ce que le faisceau lumineux laser (26) pouvant être généré par le laser (12) soit aligné parallèlement à l'axe de rotation (34) du premier arbre (28) et puisse être incident sur le champ de mesure (16),

dans lequel l'unité d'évaluation (40) est conçue pour déterminer, à partir des coordonnées X et des coordonnées Y d'au moins trois positions du point lumineux laser, qui sont détectées lors d'une rotation du premier ou du deuxième arbre d'au moins 90 degrés, et qui sont occupées par le point lumineux laser pendant la rotation sur le champ de mesure, la coordonnée X détectée en premier dans le temps et la coordonnée Y détectée en premier dans le temps et pour associer lesdites coordonnées détectées en premier dans le temps à une valeur d'angule de rotation prédéterminée,

dans lequel l'unité d'évaluation est conçue pour déterminer une trajectoire fermée (10) à partir des coordonnées X détectées et/ou des coordonnées Y détectées, et

dans lequel l'unité d'évaluation (40) est en outre conçue pour déterminer une représentation de la trajectoire (10) sur la base des coordonnées X et/ou des coordonnées Y détectées, qui est paramétré par l'angle de rotation du premier ou du deuxième arbre (28, 32), lequel est mesuré à partir de la valeur d'angle de rotation prédéterminée dans la direction du sens de rotation prédéterminé.

8.  Dispositif (36) selon la revendication 7, **caractérisé en ce que** la trajectoire fermée (10) est une ellipse ou un cercle.

9.  Dispositif (36) selon la revendication 7, **caractérisé en ce que** la trajectoire fermée (10) est une ellipse ou un cercle, et **en ce que**, pour déterminer la trajectoire (10) paramétrée par l'angle de rotation du premier ou du deuxième arbre (28,32), l'unité d'évaluation (40) est conçue pour utiliser exclusivement les coordonnées Y détectées pour une rotation de 360 degrés ou exclusivement les coordonnées X détectées pour une rotation de 360 degrés d'au moins seize positions du point lumineux laser.

10. Dispositif selon la revendication 7, **caractérisé en ce que** l'unité d'évaluation (40) est conçue pour déterminer une trajectoire fermée (10) sous la forme d'une ellipse ou d'un cercle par un ajustement de courbe aux coordonnées X et aux coordonnées Y détectées d'au moins trois positions du point lumineux laser pour une rotation du premier ou du deuxième arbre (28, 32) d'au moins 90 degrés et de moins de 360 degrés ou de sensiblement 180 degrés, et **en ce que**, pour déterminer la représentation paramétrée de la trajectoire (10), l'unité d'évaluation (40) est en outre configurée pour associer à chaque point de la trajectoire (10) l'angle de rotation à mesurer à partir de la valeur d'angle de rotation prédéterminée dans la direction du sens de rotation prédéterminé.

Fig. 1A

Fig. 1D

Fig. 1B    Stand der Technik

Fig. 1C    Stand der Technik

Fig. 2

Fig. 3

Fig. 4A

Fig. 4B

Fig. 4C

Fig. 5

Fig. 6

Fig. 7A

EP 2 950 046 B1

Fig. 7B

56

12

52

Y

X

46  50  48

Stand der Technik

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19506471 A1
- DE 10236555 A1
- DE 10142462 A1
- DE 10138831 A1
- DE 3911307 A1
- DE 19949834 A1
- US 20140139823 A1
- US 20020129504 A1
- US 6434849 B1
- DE 102004024398 A1
- DE 112004000113 T5